# FASCICULE DE BREVET EUROPEEN

(11) **EP 2 209 711 B1**
(45) Date de publication et mention de la délivrance du brevet: **25.04.2012**
(21) Numéro de dépôt: 08839251.9
(22) Date de dépôt: 12.09.2008
(51) Int. Cl.: B64C 1/06, B64C 1/12

(54) **STRUCTURE D'AVION COMPORTANT DES JONCTIONS D'ARRÊTS DE RAIDISSEUR**
FLUGZEUGAUFBAU MIT VERSTEIFUNGSKANTENVERBINDUNGEN
AIRCRAFT STRUCTURE INCLUDING STIFFENER EDGE JUNCTIONS

(30) Priorité: 18.10.2007 FR 0758423
(43) Date de publication de la demande: 28.07.2010
(73) Titulaire: AIRBUS OPERATIONS (S.A.S), 31060 Toulouse (FR)
(72) Inventeur: CAZENEUVE, Hélène, F-31830 Plaisance du Touch (FR); CACCIAGUERRA, Bruno, F-31810 Clermont le Fort (FR); LACOMBE, Jean Claude, F-31700 Blagnac (FR); ANDISSAC, David, F-31500 Toulouse (FR)
(74) Mandataire: Lotaut, Yacine Diaw
(86) Numéro de dépôt international: PCT/FR2008/051631
(87) Numéro de publication internationale: WO 2009/050358

(56) Documents cités:
- EP-A- 1 719 698
- WO-A-2006/001859
- US-A- 5 518 208
- US-A1- 2006 060 705

## Description

La présente invention appartient au domaine des structures comportant des panneaux raidis. Il s'agit de panneaux essentiellement constitués d'un revêtement mince dont la stabilité structurale est assurée par des éléments rapportés sur le revêtement.

Plus particulièrement, l'invention concerne des structures dans lesquelles les panneaux raidis, tels que ceux utilisés pour la réalisation de fuselage d'aéronef, sont assemblés sans continuité des raidisseurs à la jonction desdits panneaux.

Pour les besoins de l'exposé de l'état de l'art relatif à l'assemblage de panneaux raidis, comme pour celui d'un exemple de réalisation de l'invention, il sera décrit le cas de l'assemblage de panneaux raidis destinés à la réalisation d'un fuselage d'avion, comme dans le document US 20060060705.

Un fuselage d'avion est typique d'une structure dite « coque », particulièrement pour des raisons de légèreté, essentielle dans le domaine aéronautique. Sur les avions conventionnels, le fuselage comporte une section sensiblement constante sur une partie de sa longueur, qui donne au fuselage une forme générale cylindrique bien connue.

Pour des raisons industrielles et logistiques, un tel fuselage est souvent réalisé en plusieurs tronçons cylindriques ou en plusieurs panneaux de tronçons suivant le type d'assemblage prévu par le processus industriel. Lorsque le fuselage est réalisé en plusieurs tronçons, chaque tronçon peut lui-même comporter plusieurs panneaux.

Afin d'avoir une structure rigide mais légère, les structures coques comportent généralement un revêtement de relativement faible épaisseur, situé sur la paroi interne du cylindre. Ce revêtement est également appelé peau. Les structures coques comportent également des éléments structuraux fixés audit revêtement, destinés à assurer à la fois la résistance et la stabilité desdites structures. Dans une structure de fuselage d'avion, les éléments structuraux orientés sensiblement dans le sens des génératrices du cylindre de fuselage sont dénommés raidisseurs. Les éléments structuraux se situant dans un plan sensiblement normal aux dites génératrices sont dénommés cadres.

Dans le cas des avions, pour des raisons aérodynamiques, les raidisseurs et les cadres sont généralement situés à l'intérieur du fuselage, donc fixés sur le revêtement, lui-même situé sur la paroi interne des tronçons du fuselage.

Lorsque l'on assemble des panneaux pour former un tronçon ou un fuselage, ces panneaux sont généralement déjà équipés de raidisseurs. Les raidisseurs s'arrêtent alors aux bords du panneau situés du côté des extrémités des raidisseurs, les dits bords du panneau étant dénommés, par extension, extrémités du panneau. Ces panneaux, composés d'un revêtement et de raidisseurs sont dénommés panneaux auto-raidis.

Lors de l'assemblage des tronçons ou des panneaux pour réaliser un fuselage, il est nécessaire d'assurer que les efforts dans le revêtement et dans les raidisseurs seront transmis d'un tronçon à l'autre ou d'un panneau à l'autre. Il s'agit notamment d'efforts de traction, de compression et/ou de cisaillement.

Afin d'assurer le transfert de ces efforts, une solution consiste à réaliser la continuité du revêtement et la continuité des raidisseurs au niveau d'une jonction de panneaux. Cette continuité est obtenue au moyen de pièces de jonctions, de panneau à panneau d'une part et de raidisseur à raidisseur d'autre part. Lesdites pièces de jonction sont réalisées de manière à conserver à la structure assemblée une section transversale et une inertie constante sur toute sa longueur.

Une méthode généralement utilisée consiste à fixer une plaque aux revêtements des deux panneaux, ladite plaque épousant la courbure des panneaux et recouvrant partiellement les deux panneaux positionnés bout à bout. Lorsque l'assemblage du fuselage est réalisé par tronçons, cette plaque, dite virole, parcourt tout ou partie du périmètre du fuselage au niveau de la jonction.

Pour réaliser une liaison entre deux raidisseurs en vis à vis au niveau d'une jonction, une pièce spécifique, dite éclisse, est fixée entre les deux raidisseurs. Une éclisse présente une section généralement similaire à celle des raidisseurs concernés par la jonction et recouvre chaque raidisseur sur une longueur suffisante pour transmettre efficacement les efforts d'un raidisseur à l'autre.

Une des difficultés liée à ce type de jonction est due au mauvais alignement des raidisseurs devant être assemblés au niveau d'une jonction.

Les dispersions inévitables sur les dimensions des raidisseurs et leurs positions sur les revêtements, liées aux procédés de fabrication et d'assemblage des panneaux, ne permettent pas de garantir un alignement rigoureux des raidisseurs entre les deux panneaux ou les deux tronçons à assembler.

Une solution connue consiste à ne pas fixer les raidisseurs aux revêtements sur toute leur longueur. Une longueur suffisante est laissée libre aux extrémités des dits raidisseurs devant être éclissés. Après avoir positionné les panneaux à assembler, il est donc possible de déformer les raidisseurs dans la limite de leur domaine élastique, pour les aligner avant de terminer leur assemblage aux panneaux et à l'éclisse.

Cette solution nécessite donc des opérations d'assemblage particulières et n'est pas réalisable dans des situations où les raidisseurs sont fixés sur toute leur longueur, comme par exemple des raidisseurs soudés ou des raidisseurs collés, en particulier dans le cas des structures en matériaux composites.

Dans ces cas, il est nécessaire de réaliser des panneaux avec des tolérances dimensionnelles très serrées. Cette solution trouve rapidement ses limites sur des assemblages de grandes dimensions et s'avère toujours très coûteuse. Les défauts d'alignements peuvent également être corrigés au moyen de cales. La mise en oeuvre desdites cales est délicate et longue, imposant, lorsqu'un mastic polymérisable est utilisé, un temps d'attente pénalisant la durée des assemblages.

En outre, certaines formes de raidisseurs, particulièrement utilisés dans les structures en matériaux composites, présentent des sections fermées. Une fois assemblé avec un panneau, il n'est donc pas possible d'accéder à l'intérieur du raidisseur. C'est le cas général des raidisseurs comportant deux semelles et un corps reliant lesdites deux semelles. Ces raidisseurs sont dits raidisseurs en oméga, en raison de leur section de forme caractéristique en oméga majuscule (Ω).

En absence de possibilité d'inspection de l'intérieur de tels raidisseurs, il n'est pas recommandé de poser des fixations qui débouchent à l'intérieur de ces raidisseurs.

En outre, dans certains cas, la jonction est réalisée en présence d'un cadre de renfort. Dans ces cas, afin d'assurer le passage des éclisses d'une extrémité de raidisseur à l'autre, il est nécessaire de pratiquer des ouvertures à travers le cadre de renfort. Ces ouvertures diminuent la résistance structurale du cadre de renfort. De plus, la présence du cadre augmente significativement la complexité des opérations d'assemblage des éclisses et celle des opérations l'assemblage des tronçons.

L'invention se propose de résoudre ces difficultés de l'art antérieur. L'invention a donc pour but de permettre une fabrication et une installation simples et rapides de structures telles qu'un fuselage d'avion ayant de tels raidisseurs interrompus. L'invention a aussi pour but de permettre une transmission efficace des efforts malgré les interruptions des raidisseurs.

De plus, l'invention a pour but d'éviter des fixations en aveugle, c'est à dire d'éviter des fixations qui débouchent à l'intérieur de raidisseurs de sections fermées, comme les raidisseurs en oméga. L'invention a également pour but de fournir des jonctions ne nécessitant pas la création d'ouvertures dans le cadre.

Pour résoudre ces problèmes, l'invention prévoit la présence d'un doubleur selon les caractéristiques de la revendication 1. Un doubleur a pour but de faire descendre les efforts du raidisseur vers le revêtement ou vers la peau du panneau. Afin de permettre un transfert progressif des efforts, les raidisseurs sont interrompus progressivement. Un tel doubleur décharge donc les raidisseurs afin qu'il n'y ait pratiquement plus d'effort dans le raidisseur au niveau de l'interruption dudit raidisseur et que la virole suffise à transmettre les efforts d'un panneau à l'autre.

L'invention vise à faire diminuer le « taux de raidissement » par une interruption progressive des raidisseurs. Selon l'invention, les semelles des raidisseurs sont systématiquement élargies dans la zone de jonction. Cela permet d'absorber les désalignements et de garantir assez de matière entre les fixations et les bords de pièces pour une transmission efficace des efforts.

L'invention présente de multiples variantes, notamment au niveau du doubleur. Le doubleur peut être une pièce supplémentaire collée au dessus de la peau, ou éclissée au dessus de la peau, ou intégrée sous la peau du panneau. Selon une autre variante, le rôle de doubleur peut être rempli par la présence d'une surépaisseur de peau sous les raidisseurs, ou encore le doubleur peut être intégré à la virole. De même, les semelles de raidisseur peuvent être élargies pour se toucher et remplir le rôle de doubleur, voire même, dans certains cas, il peut être prévu une absence de doubleur avec virole droite ou crantée.

L'invention a donc pour objet une structure d'avion comportant un premier panneau raidi, ledit premier panneau comportant une peau et au moins un raidisseur, le raidisseur du premier panneau comportant au moins deux semelles fixées sur une face de la peau dudit panneau, le raidisseur du premier panneau s'étendant suivant un axe longitudinal du premier panneau, le raidisseur du premier panneau étant interrompu, au moins un deuxième panneau raidi, ledit deuxième panneau comportant une peau et au moins un raidisseur, le raidisseur du deuxième panneau comportant au moins deux semelles fixées sur une face de la peau dudit panneau, le raidisseur du deuxième panneau s'étendant suivant un axe longitudinal du deuxième panneau, le raidisseur du deuxième panneau étant interrompu, dans ladite structure d'avion, le premier panneau et le deuxième panneau sont assemblés de telle sorte que leurs extrémités sont à proximité, formant ainsi une ligne d'interface, le raidisseur du premier panneau étant en vis à vis du raidisseur du deuxième panneau, lesdits raidisseurs étant sensiblement alignés suivant une direction sensiblement parallèle à l'axe longitudinal des panneaux, une virole recouvre partiellement le premier panneau et le deuxième panneau, cette virole est assemblée d'une part au premier panneau et d'autre part au deuxième panneau, ladite structure d'avion étant caractérisée en ce que la virole recouvre partiellement au moins deux semelles du raidisseur du premier panneau et au moins deux semelles du raidisseur du deuxième panneau, ladite structure comporte au moins un doubleur, ledit doubleur s'étend sur les panneaux s'étendant sur les panneaux sur une distance, suivant les axes longitudinaux desdits panneaux, au moins égale à la distance recouverte par la virole suivant ces axes longitudinaux de part et d'autre de la ligne d'interface desdits panneaux, le doubleur associé aux semelles de raidisseur forme une surface d'appui continue et régulière pour la virole.

L'invention sera mieux comprise à la lecture de la description ci-dessous, à associer aux figurent qui l'accompagnent. Celles-ci ne sont présentées qu'à titre indicatif et nullement limitatif de l'invention. Les figures montrent :
- Figure 1 : Une vue de profil d'un avion avec zoom sur des éléments de structure comportant des panneaux auto-raidis ;
- Figures 2A et 2B : Représentation de deux exemples de coupes transversales de panneaux comportant des raidisseurs de forme Ω ;
- Figure 3 : Une vue de dessus schématique de la zone de jonction des panneaux de fuselage selon un premier mode de réalisation de l'invention ;
- Figure 4 : Une coupe entre deux raidisseurs côte à côte sur la patte du doubleur selon ce premier mode de réalisation de l'invention ;
- Figure 5 : Une coupe de la zone de jonction des panneaux entre deux raidisseurs selon ce premier mode de réalisation de l'invention ;
- Figure 6 : Une vue de dessus schématique de la zone de jonction des panneaux de fuselage selon un deuxième mode de réalisation de l'invention ;
- Figure 7 : Une coupe entre deux raidisseurs selon ce deuxième mode de réalisation de l'invention ;
- Figure 8 : Une vue de dessus schématique de la zone de jonction des panneaux de fuselage selon un troisième mode de réalisation de l'invention ;
- Figure 9 : Une coupe entre deux raidisseurs selon ce troisième mode de réalisation de l'invention ;
- Figure 10 : Une vue de dessus schématique de la zone de jonction des panneaux de fuselage selon un quatrième mode de réalisation de l'invention ;
- Figure 11 : Une coupe entre deux raidisseurs selon ce quatrième mode de réalisation de l'invention ;
- Figure 12 : Une vue de dessus schématique de la zone de jonction des panneaux de fuselage selon un cinquième mode de réalisation de l'invention ;
- Figure 13 : Une coupe entre deux raidisseurs selon ce cinquième mode de réalisation de l'invention ;

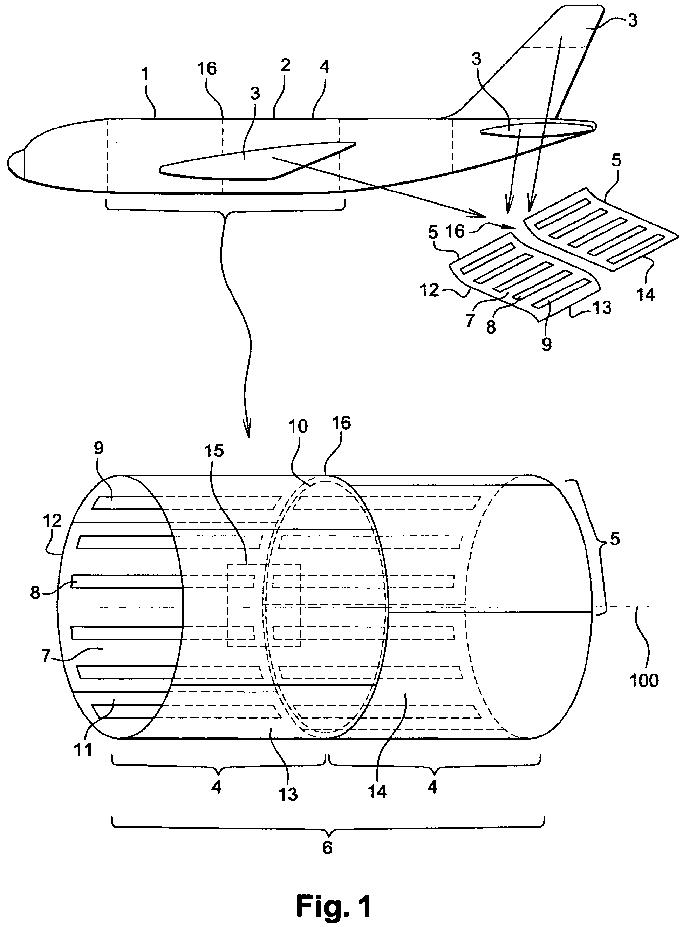

La figure 1 représente une vue de profil d'un avion avec zoom sur des éléments de structure comportant des panneaux auto-raidis. L'avion 1 comporte un fuselage 2 ayant généralement une structure dite en « coque ». La description détaillée de l'invention sera par la suite appliquée au cas de la structure du fuselage 2, ce cas pouvant aisément être adapté par l'homme de l'art aux autres structures comportant des panneaux auto-raidis d'un avion 1.

Un fuselage 2 est réalisée à partir de tronçons 4 ou de panneaux 5 assemblés. Plus particulièrement, ces tronçons 4 ou panneaux 5 sont associés entre eux pour former la structure principale du fuselage 2.

La voilure ou encore les empennages verticaux et ou horizontaux peuvent, eux aussi, être réalisés à partir de panneaux 5 dans le cas d'un avion 1. De même, un tronçon 4 peut lui même être réalisé à partir de panneaux 5 associés entre eux pour former ledit tronçon 4. Un tel fuselage 2 comporte une partie 6 de sa structure sensiblement cylindrique telle que représentée sur la partie 6 agrandie de la figure 1.

Afin d'obtenir un fuselage 2 rigide et léger, le panneau 5 comporte un revêtement 7. Un tel revêtement 7, aussi appelé peau, est de relativement faible épaisseur. De plus, des éléments structuraux 8 sont fixés audit revêtement. Des éléments structuraux de forme allongée 9 se développent suivant une direction sensiblement parallèle aux génératrices du fuselage 2, aussi appelé axe 100 longitudinal du panneau 5. Ces éléments structuraux 9 seront par la suite appelés raidisseurs 9. De même, des éléments structuraux 10 se développent dans un plan sensiblement perpendiculaire aux génératrices du fuselage 2. Ces éléments structuraux 10 seront appelés par la suite cadres 10.

Dans un avion 1, les raidisseurs 9 sont généralement installés sur une face intérieure du fuselage 2. Plus particulièrement les raidisseurs 9 sont fixés sur la peau 7. Ladite peau 7 est située sur une paroi 11 interne des tronçons 4 ou des panneaux 5, c'est à dire sur une face interne du fuselage 2.

Des raidisseurs 9 sont généralement fixés sur la peau 7 d'un premier panneau 13 et d'un deuxième panneau 14 avant assemblage desdits panneaux 13 et 14 entre eux. Les raidisseurs 9 fixés sur la peau 7 desdits panneaux 13 et 14 sont donc interrompus à proximité des bords 12 desdits panneaux 13 et 14, aussi appelés extrémités 12 des panneaux 5. Le premier panneau 13 et le deuxième panneau 14 sont assemblés de telle sorte que leurs extrémités 12 sont placées proches l'une de l'autre et forment une ligne d'interface 16.Cependant, les raidisseurs 9 doivent être sensiblement alignés d'un premier panneau 13 au deuxième panneau 14 suivant pour permettre le transfert des efforts d'un raidisseur 9 d'un premier panneau 13 jusqu'au raidisseur 9 d'un deuxième panneau 14. Dans l'état de la technique, cet alignement est pratiquement impossible à réaliser avec des tolérances acceptables pour faire un éclissage des raidisseurs sans procédé long et coûteux.

Dans cette figure 1, on peut situer une zone 15 de l'assemblage qui sera détaillée dans les figures suivantes. Cette zone 15 correspond au détail des éléments suivant la ligne d'interface 16 prise à l'endroit de la jonction entre le premier panneau 13 et le deuxième panneau 14. Les raidisseurs 9 sont donc sensiblement en vis à vis sur une telle ligne d'interface 16.

Cette figure 1 montre aussi que de telles lignes d'interface 16 de panneaux 5 avec raidisseurs 9 peuvent exister hors du fuselage 2, pour les panneaux 5 des empennages verticaux, horizontaux et pour la voilure.

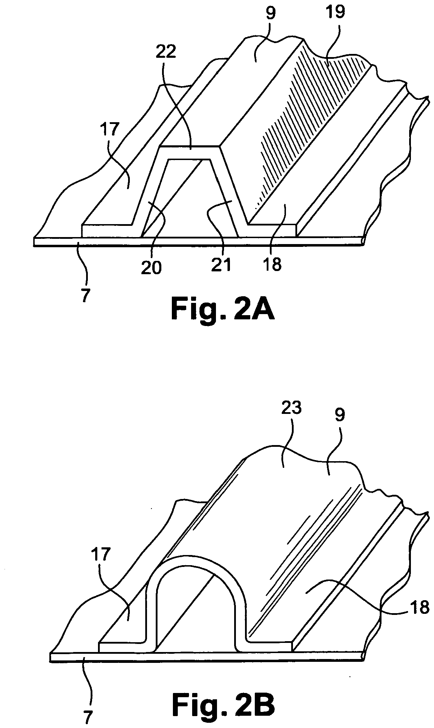

Les figures 2A et 2B représentent deux exemples de coupes transversales de panneaux comportant des raidisseurs de forme en oméga (Ω). Un raidisseur 9 ayant une coupe transversale en oméga comporte une première semelle 17, une deuxième semelle 18 et un corps 19 de raidisseur 9. La première semelle 17 et la deuxième semelle 18 sont situées de part et d'autre du corps 19. Le corps 19 relie entre elles les semelles 17 et 18.

Dans une première variante, figure 2A, le corps 19 comporte un premier flanc latéral 20, appelée première âme 20, et un deuxième flanc latéral 21, appelée deuxième âme 21, qui sont reliés respectivement à la première semelle 17 et à la deuxième semelle 18. Les âmes 20 et 21 sont reliées entre elles par une tête 22. Une telle tête 22 se développe de manière sensiblement parallèle aux semelles 17 et 18. Ce raidisseur 9 est fixé sur la peau 7. Plus particulièrement, le raidisseur 9 est fixé sur la peau 7 du panneau 5 par ses semelles 17 et 18.

Dans une deuxième variante de réalisation, figure 2B, la forme en oméga peut être obtenue grâce à la présence de la première semelle 17 et de la deuxième semelle 18 reliées entre elles par une surface 23 de section arrondie. Une telle surface 23 remplie le même rôle que les âmes 20 et 21 et que la tête 22 d'un raidisseur 9 réalisé selon la première variante.

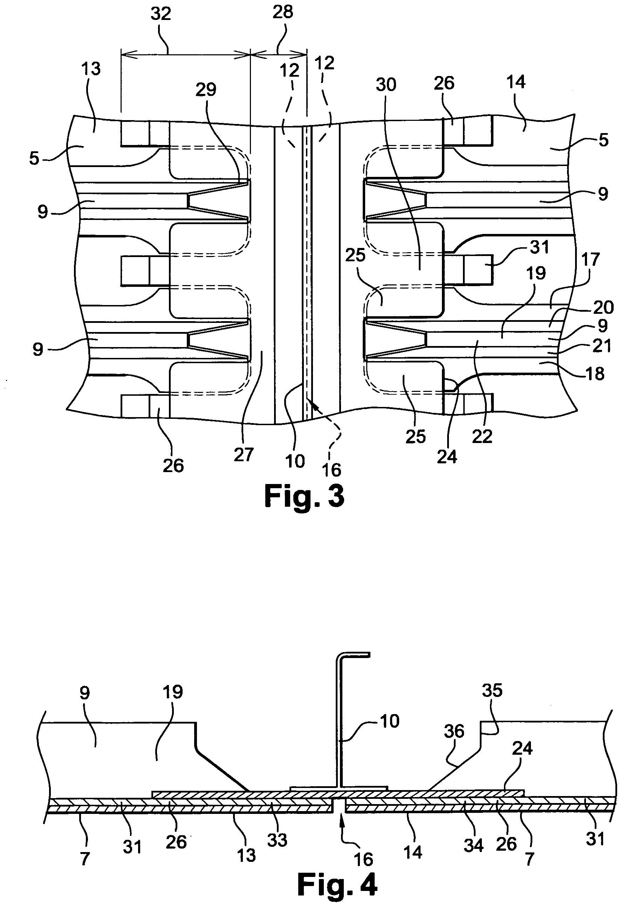

La figure 3 représente une vue de dessus schématique de la zone de jonction des panneaux de fuselage selon un premier mode de réalisation de l'invention.

Cette figure 3 représente la ligne d'interface 16 entre le premier panneau 13 et le deuxième panneau 14. Les panneaux 13 et 14 sont des panneaux 5 auto-raidis. Les panneaux 13 et 14 comportent donc des raidisseurs 9 tels que décrits ci dessus. Lors de l'assemblage entre le premier panneau 13 et le deuxième panneau 14, les raidisseurs 9 du premier panneau 13 sont situés sensiblement en vis à vis des raidisseurs 9 du deuxième panneau 14, par rapport à la ligne d'interface 16. Ainsi, du premier panneau 13 au deuxième panneau 14, suivant une direction parallèle à l'axe 100 du fuselage 2, les raidisseurs 9 conservent sensiblement un même alignement dans l'ensemble du fuselage 2 malgré les interruptions.

Selon l'invention, afin d'assurer la continuité des efforts entre le premier panneau 13 et le deuxième panneau 14, une virole 24 est installée. Une telle virole 24 est assemblée d'une part au premier panneau 13 et d'autre part au deuxième panneau 14. Afin de faire descendre les efforts à transmettre des panneaux 13 et 14 dans les semelles 17 et 18, les âmes 20 et 21 ainsi que la tête 22 des raidisseurs 9 sont arrêtés progressivement avant la ligne d'interface 16.

La virole 24 recouvre à la fois une partie du premier panneau 13 et une partie du deuxième panneau 14. Une telle virole 24 crée une liaison physique entre les panneaux 13 et 14. Une telle virole 24 éclisse également les semelles 17 et 18 du raidisseur 9. Ainsi, la virole 24 recouvre les extrémités 25 des semelles 17 et 18 du raidisseur 9. Avantageusement, les semelles 17 et 18 des raidisseurs 9 sont localement élargies suivant une direction sensiblement perpendiculaire à l'axe 100, aussi appelée direction transverse par rapport aux directions des raidisseurs 9. Cet élargissement est situé aux extrémités 25 de chaque semelle 17 et 18. Ces semelles 17 et 18 élargies permettent de positionner correctement des fixations de raidisseur 9, malgré des décalages possibles entre lesdits raidisseurs 9 des deux panneaux 13 et 14, liés aux tolérances de fabrication. Cet élargissement des semelles 17 et 18 permet donc d'éclisser la virole 24 sur les semelles 17 et 18 en respectant des contraintes de distance entre les fixations et les bords de la virole 24.

Selon l'invention, sur l'extrémité 12 de chaque panneau 5 est appuyé un élément 26 d'ajustement de l'épaisseur, aussi appelé un doubleur 26. Un tel doubleur 26 remplit la fonction d'appui pour la virole 24, le doubleur 26 s'étendant sur une surface au moins égale à une surface recouverte par la virole 24, de part et d'autre de la ligne d'interface 16 desdits panneaux 13 et 14. Selon les axes longitudinaux des panneaux, parallèles à l'axe 100, le doubleur 26 s'étend sur une distance au moins égale à la distance sur laquelle s'étend la virole 24. Le doubleur 26 assure à la virole une surface d'appui régulière et continue du fait que la surface du doubleur du côté de la virole 24 est en continuité avec la surface libre des semelles des raidisseurs 9.

Dans un premier mode de réalisation, le doubleur 26 est cranté, c'est à dire que le doubleur 26 se présente sous la forme d'une tôle à doigts. Le doubleur 26 cranté comporte une bande 27 qui s'étend le long de l'interface 16 des panneaux 13 et 14. Parallèlement à l'axe 100, cette bande 27 s'étend sur une distance 28 sensiblement égale à la distance séparant le bord 12 d'un panneau 5 et une extrémité 29 de raidisseurs 9. De plus, cette bande 27 s'étend sur toute la largeur du panneau 5, suivant la direction transverse.

Le doubleur 26 s'étend aussi sur une surface 30 située entre deux raidisseurs 9 voisins. Au moins un bord du doubleur 26 est cranté. Le bord cranté présente au moins une extension appelée patte 31, cette patte 31 s'étendant sur la surface 30. La longueur 32 des pattes 31, parallèlement à l'axe 100, est adaptée aux efforts à transmettre d'un raidisseur 9 du premier panneau 13 au raidisseur 9 du deuxième panneau 14 en vis à vis ainsi qu'à la virole 24. Typiquement la longueur 32 additionnée à la longueur 28 est supérieure ou égale à la longueur de la virole 24 suivant une direction parallèle à l'axe 100. De la sorte, le doubleur 26 assure à la virole 24 un appui continu et régulier. La largeur des pattes 31, suivant la direction transverse, couvre sensiblement toute la surface 30 de peau 7 entre deux raidisseurs 9 situés côte à côte sur un même panneau 5.

Dans ce mode de réalisation, les pattes 31 et la bande 27 ne forment qu'une unique pièce. L'épaisseur du doubleur 26 est telle que la surface d'appui formée par les semelles 17 et 18 et par le doubleur 26 est régulière et continue. Typiquement, le doubleur 26 a une épaisseur sensiblement égale à l'épaisseur des semelles 17 et 18.

Par ailleurs, comme il est illustré sur la figure 3, les cadres 10 peuvent être fixés sur la virole 24 au niveau de la ligne d'interface 16. Plus particulièrement un cadre 10 est fixé sur la virole 24 à l'endroit de la ligne d'interface 16 entre le premier panneau 13 et le deuxième panneau 14. Ainsi, selon l'invention, aucun ouverture n'est pratiquée dans le cadre 10 afin de transmettre les efforts entre un raidisseur 9 du premier panneau 13 au deuxième panneau 14, ces efforts suivant une cheminement d'efforts passant sous ledit cadre 10, entre le cadre 10 et le revêtement 7.

Dans le premier mode de réalisation, et dans le cas d'un panneau en matériau composite, le doubleur 26 est avantageusement co-cuit avec la peau 7. Un tel mode de réalisation impose de faire une prise de pli progressive.

La figure 4 représente une vue en coupe du premier mode de réalisation de l'invention, le plan de coupe se situant sur une patte du doubleur, entre deux raidisseurs 9 côte à côte.

La présence du doubleur 26 assure à la virole 24 un appui continu et régulier. Ainsi, le doubleur 26 s'étend sur toute la surface entre les semelles 17 et 18 de deux raidisseurs 9 côte à côte. Dans ce mode de réalisation, le doubleur est intégré au panneau auto-raidi avant assemblage des panneaux entre eux. Le doubleur 26 est donc interrompu au niveau de la ligne d'interface 16 des deux panneaux 13 et 14, de par la nature des panneaux auto-raidis.

Dans le cas d'un panneau auto-raidi en matériau composite, le douleur 26 est alors réalisé en deux parties, une première partie 33 de doubleur 26 co-cuite avec le premier panneau 13 et une deuxième partie 34 du doubleur 26 co-cuite avec le deuxième panneau 14.

Pour réaliser l'arrêt progressif, une pente est réalisée sur le corps 19 du raidisseur 9. Cet arrêt progressif peut comporter un rebord 35 sensiblement perpendiculaire aux semelles 17 et 18 pour la tête 22, puis une pente progressive 36 pouvant par exemple être de l'ordre des 45° pour les âmes 20 et 21.

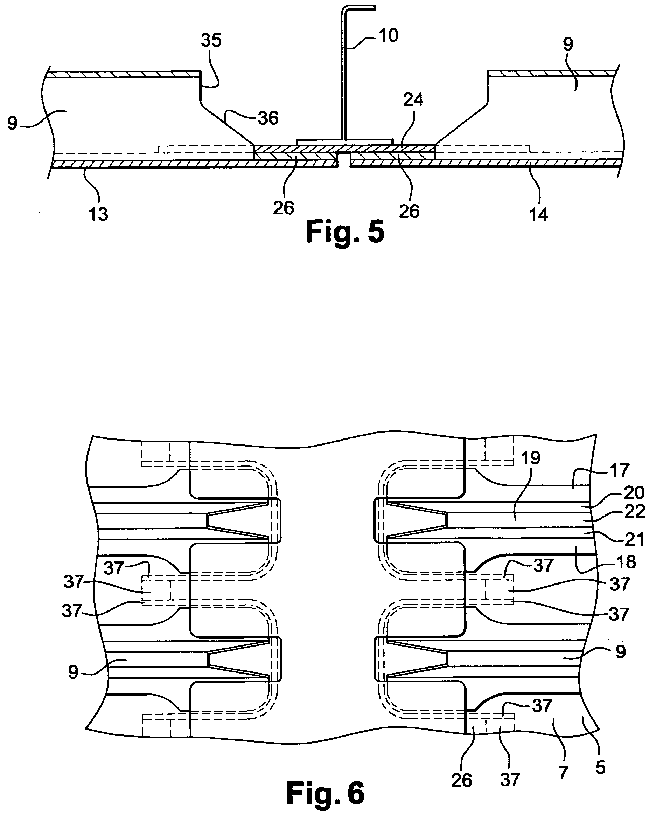

La figure 5 représente une vue en coupe de ce premier mode de réalisation de l'invention, le plan de coupe étant un plan de symétrie d'un raidisseur. Entre deux raidisseurs 9 d'un premier et d'un deuxième panneau (13,14), l'interruption du doubleur 26 est située à proximité immédiate de l'interruption des semelles 17 et 18. Cette proximité est telle que seul les jeux imposés par les tolérances de montage sont présent entre le doubleur 26 et les semelles 17 et 18. L'arrêt progressif de la tête 19 ayant entraîné la diffusion des efforts dans les semelles 17 et 18, l'interruption du doubleur 26 doit être telle que les efforts puissent passer aisément des semelles 17 et 18 jusqu'au doubleur 26 et du doubleur 26 jusqu'à la virole 24.

La figure 6 représente une vue de dessus schématique de la zone de jonction des panneaux de fuselage selon un deuxième mode de réalisation de l'invention. Selon ce deuxième mode de réalisation de l'invention, le doubleur 26 est intégré à la peau 7. Plus particulièrement, le doubleur est alors situé à l'intérieur de la peau 7 d'un panneau 5. Une telle insertion du doubleur 26 à la peau 7 d'un panneau 5 entraîne une variation du niveau de la surface de la peau 7, la virole 24 étant alors directement fixée sur la peau 7.

Dans le cas d'un panneau 5 auto-raidi en matériau composite, le doubleur 26 est avantageusement co-cuit dans les plis du panneau. Un tel doubleur entraîne la formation de plis et pentes 37 de ladite peau 7.

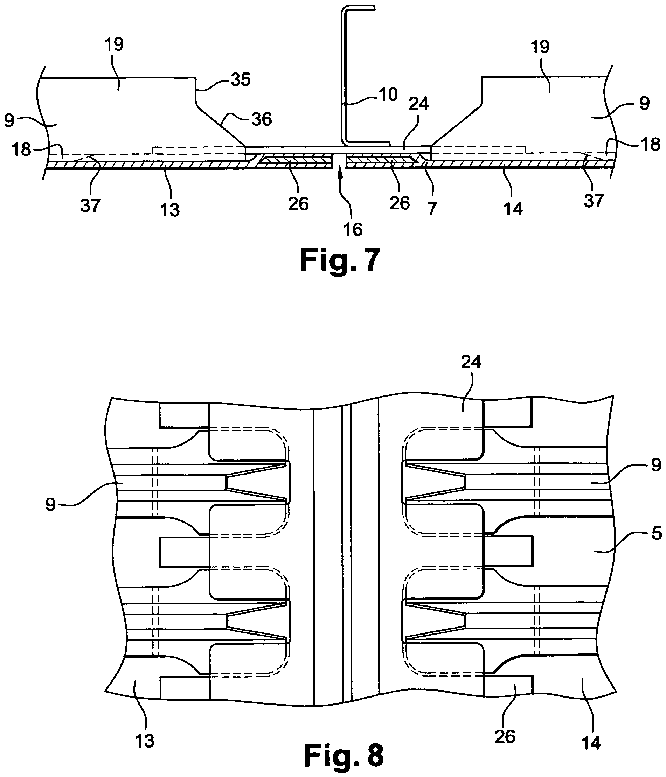

La figure 7 représente une coupe des panneaux entre deux raidisseurs côte à côte, selon ce deuxième mode de réalisation de l'invention. Le doubleur 26 est intégré à la peau 7. Comme selon le premier mode de réalisation de l'invention, le doubleur 26 est interrompu par la ligne d'interface 16 du premier panneau 13 et du deuxième panneau 14.

La figure 8 représente une vue de dessus schématique de la zone de jonction des panneaux de fuselage selon un troisième mode de réalisation de l'invention. Contrairement aux deux premiers modes de réalisation où le doubleur 26 était intégré aux panneaux 5, le doubleur 26 est ici une pièce rapportée, c'est à dire construite indépendamment des panneaux 5. Ce doubleur 26 rapporté est installé lors de l'assemblage des panneaux 13 et 14 entre eux. Par ailleurs, le doubleur 26 rapporté n'est pas interrompu par la ligne d'interface 16 entre le premier panneau 13 et le deuxième panneau 14.

De part sa continuité, le doubleur 26 sert au transfert des efforts d'un raidisseur 9 du premier panneau 13 au raidisseur 9 en vis à vis du deuxième panneau 14. Ce transfert des efforts a lieu de manière équivalente au transfert des efforts effectué par la virole 24.

Dans une variante de réalisation de l'invention selon ce mode de réalisation, le doubleur 26 est intégré à la virole 24. Un tel doubleur 26 intégré à la virole simplifie les opérations d'assemblage des panneaux 5 entre eux. Une telle pièce peut être réalisée, par exemple, en utilisant des pièces thermoplastiques thermo-soudées.

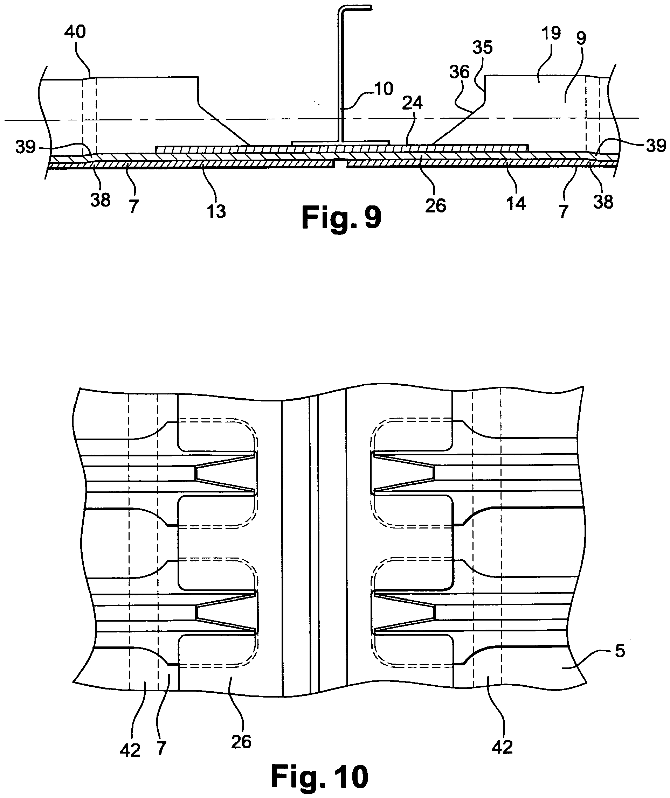

La figure 9 représente une coupe des panneaux entre deux raidisseurs côte à côte, selon ce troisième mode de réalisation de l'invention. Le doubleur 26 est continu malgré la ligne d'interface 16. Afin de faire descendre les efforts du raidisseur 9 dans la virole 24, la peau 7 est épaissie localement. Plus particulièrement la peau 7 est épaissie juste avant la zone d'éclissage, c'est à dire que l'épaississement de la peau 7 est situé sur une partie du panneau 5 commençant au bord 12 dudit panneau 5 et s'arrêtant plus éloigné de la ligne d'interface que l'extrémité 25 des semelles 17 et 18. L'épaississement 38 de la peau 7 entraîne une surélévation 39 du doubleur 26. De plus, cet épaississement 38 entraîne une surélévation 40 du raidisseur 9. Les raidisseurs 9 sont réalisés pour adopter la forme du panneau dans de telles zones de pentes.

La figure 10 représente une vue de dessus schématique de la zone de jonction des panneaux de fuselage selon un quatrième mode de réalisation de l'invention. Dans ce mode de réalisation de l'invention, le doubleur 26 n'est pas une pièce indépendante. En effet, dans ce quatrième mode de réalisation, la fonction remplie par le doubleur 26 dans les trois premiers modes de réalisation est directement remplie par la peau 7. La peau 7 est alors sur-épaissie pour jouer le rôle de doubleur 26.

Dans le cas d'un panneau 5 en matériau composite, la peau 7 subit une importante prise de plis 42, du bord 12 du panneau 5 jusqu'à une zone plus éloignée du bord du panneau 5 que la zone de début d'éclissage. La prise de plis 42 de la peau 7 est similaire à celle décrite dans le troisième mode de réalisation, mais ici la prise de plis 42 dans la peau 7 du panneau 5 est suffisamment importante pour remplir la fonction de doubleur 26.

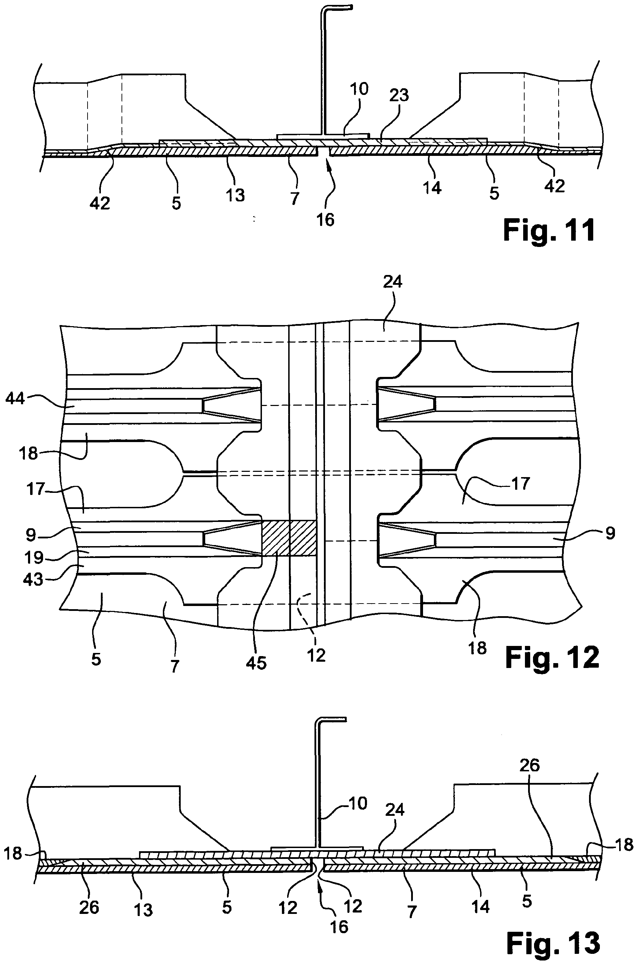

La figure 11 représente une coupe entre deux raidisseurs selon ce quatrième mode de réalisation de l'invention. Une épaisseur de la peau 7 selon ce mode de réalisation impose que le rôle de doubleur 26 soit interrompu par la ligne d'interface 16 comme c'est le cas pour un doubleur 26 intégré à la peau 7 d'un panneau 5.

La figure 12 représente une vue de dessus schématique de la zone de jonction des panneaux de fuselage selon un cinquième mode de réalisation de l'invention. Dans un tel mode de réalisation de l'invention, le rôle de doubleur est rempli par les semelles 17 et 18 de raidisseurs 9 voisins. Pour cela, les semelles 17 et 18 sont élargies, suivant la direction transverse par rapport à un axe des raidisseurs, afin que leurs bords soient à proximité immédiate l'un de l'autre. Typiquement une première semelle 17 d'un premier raidisseur 43 est localement élargie suivant la direction transverse. De même, une deuxième semelle 18 d'un deuxième raidisseur 44, le premier raidisseur 43 étant voisin du deuxième raidisseur 44, est localement élargie suivant la direction transverse. Cet élargissement des semelles 17 et 18 est tel que le bord de la première semelle 17 du premier raidisseur 43 est à proximité immédiate du bord de la deuxième semelle 18 du deuxième raidisseur 44, ces deux semelles n'étant séparées que par les jeux imposés par les tolérances de montage. Dans les zones où les raidisseurs 43 et 44 sont trop distants l'un de l'autre, de telle sorte qu'il n'est pas souhaitable d'élargir les semelles, on peut associer ce mode de réalisation à un autre des modes de réalisation décrits précédemment. Les modes de réalisation de l'invention sont, en règle générale, combinables entre eux.

De plus, les semelles 17 et 18 sont aussi étendues suivant une direction sensiblement parallèle à l'axe 100. Contrairement à la tête du raidisseur 9, les semelles se prolongent jusqu'au bord 12 du panneau 5. En outre, les semelles 17 et 18 s'étendent suivant la direction transverse afin de recouvrir la surface 45 de la peau 7 située entre le bord 12 du panneau 5 et l'interruption des têtes 19 des raidisseurs 9.

La virole 24 prend alors appui directement sur les semelles 17 et 18 des raidisseurs 9 et sur les doubleurs 26 ajoutés si nécessaires. L'élargissement transverse des semelles 17 et 18 venant couvrir la surface 45 de la peau 7 entre les têtes 19 des raidisseurs 9 et le bord 12 du panneau peut être évité en intégrant localement des doubleurs 26 couvrant ladite surface 45 de peau 7. Ces doubleurs 26 ont alors pour but d'assurer un appui régulier et continu pour la virole 24.

La figure 13 représente une coupe entre deux raidisseurs selon ce cinquième mode de réalisation de l'invention. L'avantage présenté par ce dernier mode de réalisation est de ne nécessiter aucune pièce supplémentaire dans le fuselage 2 afin de remplir le rôle de doubleur 26. Cependant, le doubleur 26, c'est à dire les semelles 17 et 18 élargies et étendues des raidisseurs 9 dans ce mode de réalisation, est interrompu au bord 12 des panneaux 5.

## Revendications

1. Structure d'avion (1) comportant
- un premier panneau (13) raidi, ledit premier panneau comportant une peau (7) et des raidisseurs (9),
- chacun desdits raidisseurs du premier panneau comportant au moins deux semelles (17,18) fixées sur une face de la peau dudit panneau dite face interne,
- les raidisseurs du premier panneau s'étendant suivant un axe longitudinal du premier panneau,
- les raidisseurs du premier panneau étant interrompus à proximité d'une extrémité dudit premier panneau,
- au moins un deuxième panneau (14) raidi, ledit deuxième panneau comportant une peau et des raidisseurs,
- chacun desdits raidisseurs du deuxième panneau comportant au moins deux semelles fixées sur une face de la peau dudit panneau dite face interne,
- les raidisseurs du deuxième panneau s'étendant suivant un axe longitudinal du deuxième panneau,
- les raidisseurs du deuxième panneau étant interrompus à proximité d'une extrémité dudit deuxième panneau,
- le premier panneau et le deuxième panneau sont assemblés de telle sorte que leurs extrémités sont placées proche l'une de l'autre et forment une ligne d'interface,
- les raidisseurs du premier panneau sont en vis à vis des raidisseurs du deuxième panneau, lesdits raidisseurs étant sensiblement alignés suivant une direction sensiblement parallèle aux axes longitudinaux (100) des panneaux,
- une virole (24) recouvre partiellement le premier panneau et le deuxième panneau, ladite virole étant assemblée d'une part au premier panneau et d'autre part au deuxième panneau,
ladite structure d'avion étant **caractérisée en ce que** :
- la virole recouvre partiellement les au moins deux semelles (17, 18) des raidisseurs du premier panneau et les au moins deux semelles des raidisseurs du deuxième panneau,
- ladite structure comporte au moins un doubleur (26), ledit doubleur (26) s'étendant sur les panneaux sur une distance, suivant les axes longitudinaux desdits panneaux, au moins égale à la distance recouverte par la virole suivant ces axes longitudinaux, de part et d'autre de la ligne d'interface desdits panneaux,
- le doubleur comporte une bande centrale (27) s'étendant localement sur toute la surface (28) interne du panneau située entre une extrémité des raidisseurs interrompus par la jonction de panneaux et le bord desdits panneaux, ainsi qu'au moins un bord cranté présentant des extensions dites pattes (31), lesdites pattes s'étendant parallèlement à l'axe longitudinal du panneau entre les raidisseurs, lesdites pattes ayant des dimensions telles qu'elles recouvrent une surface s'étendant sensiblement sur toute une surface (30) intérieure de la peau entre deux raidisseurs voisins d'un même panneau,
- le doubleur associé aux semelles de raidisseur forme une surface d'appui continue et régulière pour la virole.

2. Structure selon la revendication 1, **caractérisée en ce qu'**au moins un raidisseur est interrompu progressivement.

3. Structure selon l'une des revendications 1 à 2, **caractérisée en ce que** le doubleur est fixé à la peau du panneau.

4. Structure selon l'une des revendications 1 à 3, **caractérisée en ce que**, le panneau est en matériau composite polymérisé par cuisson et le doubleur est en matériau composite co-cuit avec la peau du panneau.

5. Structure selon l'une des revendications 1 à 3, **caractérisée en ce que** le panneau est en matériau composite et le doubleur est collé sur la peau.

6. Structure selon l'une des revendications 1 à 3, **caractérisée en ce que** les semelles des raidisseurs s'étendent et s'élargissent aux extrémités du raidisseur, lesdites semelles formant alors le doubleur.

7. Structure selon l'une des revendications 1 à 4, **caractérisée en ce que** :
- le doubleur (26) est intégré entre des plis de peau du panneau, le doubleur formant alors localement une surépaisseur de la peau,
- la surépaisseur de la peau engendrée par le doubleur associée aux semelles de raidisseur forme une surface d'appui continue et régulière pour la virole.

8. Structure selon l'une des revendications 1 à 2, **caractérisée en ce que** la peau des panneaux est localement épaissie aux bords des panneaux, cette épaississement (38) constituant alors le doubleur.

9. Structure selon l'une des revendications 1 à 2, **caractérisée en ce que** le doubleur (26) est intégré à la virole (24).

## Claims

1. An aircraft structure (1) comprising
- a first stiffened panel (13), said first panel comprising a skin (7) and stiffeners (9),
- each of said stiffeners of the first panel comprising at least two sole plates (17, 18) attached to one side of the skin of said panel, referred to as the internal side,
- the stiffeners of the first panel extending according to a longitudinal axis of the first panel,
- the stiffeners of the first panel being interrupted near to one end of said first panel,
- at least one second stiffened panel (14), said second panel comprising a skin and stiffeners,
- each of said stiffeners of the second panel comprising at least two sole plates attached to one side of the skin of said panel, referred to as the internal side,
- the stiffeners of the second panel extending according to a longitudinal axis of the second panel,
- the stiffeners of the second panel being interrupted near to one end of said second panel,
- the first panel and the second panel are assembled in such a way that their ends are placed close to each other and form a line of interface,
- the stiffeners of the first panel are opposite the stiffeners of the second panel, said stiffeners being substantially aligned according to a direction substantially parallel to the longitudinal axes (100) of the panels,
- a shroud (24) partially covering the first and second panels, said shroud being on the one hand assembled on the first panel and on the other hand assembled on the second panel,
said aircraft structure being **characterised in that**:
- the structure partially covers at least two sole plates (17, 18) of the stiffeners of the first panel and at least two sole plates of the stiffeners of the second panel,
- said structure comprises at least one doubler (26), said doubler (26) extending along the panels over a distance, according to the longitudinal axes of said panels, at least equal to the distance covered by the shroud according to these longitudinal axes, on either side of the line of interface of said panels,
- the doubler comprises a central band (27) extending locally over the entire inner surface (28) of the panel located between one end of the stiffeners interrupted by the panel junction and the edge of said panels, in addition to at least one toothed edge with extensions, referred to as feet (31), said feet extending parallel to the longitudinal axis of the panel between the stiffeners, said feet having dimensions such that they cover a surface substantially extending over an entire inner surface (30) of the skin between two neighbouring stiffeners of the same panel.
- the doubler associated to the stiffener sole plates forms a continuous and regular support surface for the shroud.

2. A structure according to claim 1, **characterised in that** at least one stiffener is progressively interrupted.

3. A structure according to one of claims 1 to 2, **characterised in that** the doubler is attached to the skin of the panel.

4. A structure according to one of claims 1 to 3, **characterised in that** the panel is made out of composite material, polymerised by firing and that the doubler is made out of composite material and cofired with the skin of the panel.

5. A structure according to one of claims 1 to 3, **characterised in that** the panel is made out of composite material and that the doubler is bonded to the skin.

6. A structure according to one of claims 1 to 3, **characterised in that** the sole plates of the stiffeners extend and are widened to the ends of the stiffener, said sole plates thus forming the doubler.

7. A structure according to one of claims 1 to 4, **characterised in that**:
- the doubler (26) is integrated between the folds of skin of the panel, the doubler thus locally forming an additional thickness of the skin,
- the additional thickness of the skin caused by the doubler associated to the sole plates of the stiffener forms a continuous and regular support surface for the shroud.

8. A structure according to one of claims 1 to 2, **characterised in that** the skin of the panels is locally thickened at the edges of the panels, this thickening (38) thus constituting the doubler.

9. A structure according to one of claims 1 to 2, **characterised in that** the doubler (26) is integrated into the shroud (24).

## Patentansprüche

1. Flugzeugstruktur (1), umfassend
- eine erste versteifte Platte (13), wobei die besagte erste Platte eine Hülle (7) und Versteifungen (9) umfasst,
- wobei jede der besagten Versteifungen der ersten Platte zumindest zwei Sohlen (17,18) umfasst, die auf einer Seite der Hülle der besagten Platte, die Innenseite genannt wird, befestigt sind,
- wobei sich die Versteifungen der ersten Platte über eine Längsachse der ersten Platte erstrecken,
- wobei die Versteifungen der ersten Platte in der Nähe eines Endes der besagten ersten Platte unterbrochen sind,
- zumindest eine zweite versteifte Platte (14), wobei die besagte zweite versteifte Platte eine Hülle und Versteifungen umfasst,
- wobei jede der besagten Versteifungen der zweiten Platte zumindest zwei Sohlen umfasst, die auf einer Seite der Hülle der besagten Platte, die Innenseite genannt wird, befestigt sind,
- wobei sich die Versteifungen der zweiten Platte über eine Längsachse der zweiten Platte erstrecken,
- wobei die Versteifungen der zweiten Platte in der Nähe eines Endes der besagten zweiten Platte unterbrochen sind,
- die erste und die zweite Platte sind so zusammengesetzt, dass ihre Enden nahe zueinander platziert sind und eine Schnittstellenlinie bilden,
- die Versteifungen der ersten Platte befinden sich gegenüber den Versteifungen der zweiten Platte, wobei die besagten Versteifungen in etwa in einer Richtung ausgerichtet sind, die in etwa parallel zu den Längsachsen (100) der Platten verläuft,
- ein Ringbeschlag (24) deckt die erste und die zweite Platte teilweise ab, wobei der besagte Ringbeschlag einerseits an der ersten Platte und andererseits an der zweiten Platte montiert ist,
wobei die besagte Flugzeugstruktur **dadurch gekennzeichnet ist, dass**:
- der Ringbeschlag teilweise die zumindest beiden Sohlen (17, 18) der Versteifungen der ersten Platte und die zumindest beiden Sohlen der Versteifungen der zweiten Platte abdeckt,
- die besagte Struktur zumindest einen Verdoppler (26) umfasst, wobei sich der besagte Verdoppler (26) über eine Distanz über die Platten erstreckt, die je nach den Längsachsen der besagten Platten zumindest gleich der Distanz ist, die vom Ringbeschlag entlang dieser Längsachsen beiderseits der Schnittstellenlinie der besagten Platten abgedeckt ist,
- der Verdoppler ein mittiges Band (27) umfasst, das sich lokal über die gesamte Innenfläche (28) der Platte erstreckt, die sich zwischen einem Ende der durch die Plattenverbindung unterbrochenen Versteifungen befindet, sowie zumindest einen gewellten Rand mit Erweiterungen, die Laschen (31) genannt werden, wobei sich die besagten Laschen parallel zur Längsachse der Platte zwischen den Versteifungen erstrecken, und die besagten Laschen solche Abmessungen aufweisen, dass sie eine Fläche abdecken, die sich in etwa über die gesamte Innenfläche (30) der Hülle zwischen den beiden benachbarten Versteifungen einer selben Platte erstreckt,
- der den Versteifungssohlen zugeordnete Verdoppler eine durchgehende und regelmäßige Auflagefläche für den Ringbeschlag bildet.

2. Struktur nach Anspruch 1, **dadurch gekennzeichnet, dass** zumindest eine Versteifung schrittweise unterbrochen ist.

3. Struktur nach einem der Ansprüche 1 bis 2, **dadurch gekennzeichnet, dass** der Verdoppler an der Hülle der Platte befestigt ist.

4. Struktur nach einem der Ansprüche 1 bis 3, **dadurch gekennzeichnet, dass** die Platte aus einem Verbundmaterial gefertigt ist, das durch Brennen polymerisiert wurde, und der Verdoppler aus einem Verbundmaterial gefertigt ist, das gemeinsam mit der Hülle der Platte gebrannt wurde.

5. Struktur nach einem der Ansprüche 1 bis 3, **dadurch gekennzeichnet, dass** die Platte aus einem Verbundmaterial gefertigt ist, und der Verdoppler auf die Hülle geklebt ist.

6. Struktur nach einem der Ansprüche 1 bis 3, **dadurch gekennzeichnet, dass** sich die Sohlen der Versteifungen bis an die Enden der Versteifung erstrecken und verbreitern, wobei die besagten Sohlen demnach einen Verdoppler bilden.

7. Struktur nach einem der Ansprüche 1 bis 4, **dadurch gekennzeichnet, dass**:
- der Verdoppler (26) zwischen den Falten der Hülle der Platte integriert ist, wobei der Verdoppler demnach lokal eine Verdickung auf der Hülle bildet,
- die Verdickung der Hülle, die vom Verdoppler gebildet wird, der den Versteifungssohlen zugeordnet ist eine durchgehende und regelmäßige Auflagefläche für den Ringbeschlag bildet.

8. Struktur nach einem der Ansprüche 1 bis 2, **dadurch gekennzeichnet, dass** die Hülle der Platten an den Rändern der Platten lokal verdickt ist, wobei diese Verdickung (38) demnach den Verdoppler bildet.

9. Struktur nach einem der Ansprüche 1 bis 2, **dadurch gekennzeichnet, dass** der Verdoppler (26) in den Ringbeschlag (24) integriert ist.
